# EUROPEAN PATENT APPLICATION

(11) **EP 4 671 040 A1**
(43) Date of publication of application: **31.12.2025**
(21) Application number: 25185882.5
(22) Date of filing: 27.06.2025
(51) Int. Cl.: B60N 2/28

(54) **CHILD SAFETY SEAT**

(30) Priority: 27.06.2024 CN 202410852234
(71) Applicant: Wonderland Switzerland AG, 6312 Steinhausen (CH)
(72) Inventor: GUO, Zhengwen, Qingxi Town, Dongguan, Guangdong, 523648 (CN)
(74) Representative: Pfenning, Meinig & Partner mbB

(57) **Abstract**

A child safety seat (10) includes a seat shell (110) and a side impact protection block (300). The side impact protection block (300) is provided on the seat shell (110) and protrudes from a surface of the seat shell (110), and the side impact protection block (300) and the seat shell (110) are a one-piece part. According to the present disclosure, the side impact protection mechanism is integrally formed with the child carrier, thereby simplifying the structure and facilitating installation and fixation operations. Moreover, a secondary fixation operation for the side-impact protection mechanism is omitted to greatly simplify the installation and fixation process of the side impact protection block and improve production efficiency, and reduce production costs.

## Description

### TECHNICAL FIELD

The present disclosure relates to a child safety seat, and particularly to a child safety seat with a side impact protection block.

### BACKGROUND

Child carriers, such as infant carriers and child safety seats, etc., are devices specifically designed for children, in which children are restrained during ride. In the event of a collision or sudden deceleration of a vehicle, the child carrier can reduce impact force on the child, thereby effectively enhancing safety of the child while riding.

In order to further improve the safety of the child carrier, in the existing technology, the child carrier is provided with a side impact protection mechanism to offer additional buffering in the event of collision at a side. However, the side impact protection mechanisms in the art are usually foldable, which leads to complex structures, complicated installation, and high costs. In the case that a side impact has a component in a folding direction of the side impact protection mechanism, there is a risk that the side impact protection block may be passively folded and thus not to provide the buffering effect as desired. Therefore, there is still room for improvement in existing side impact protection mechanisms.

### SUMMARY

An objective of the present disclosure is to provide a side impact protection mechanism and a child carrier including such side impact protection mechanism. The side-impact protection mechanism is integrally formed with the child carrier, thereby simplifying the structure and facilitating installation and fixation operations, thus addressing problems existing in the prior art.

According to one aspect of the present disclosure, there is provided a child safety seat, including: a seat shell; and a side impact protection block provided on the seat shell and protruding from a surface of the seat shell, the side impact protection block and the seat shell are a one-piece part.

According to one embodiment, an outer surface of the side impact protection block is provided with one or more energy-absorbing steps, and a connection lines of planes where the energy-absorbing steps are located divide a space between the side impact protection block and the seat shell into one or more hollow areas.

According to one embodiment, the energy-absorbing steps have wall thickness decreasing gradually from an outside to an inside; and/or a smooth arc transition or a straight line connection is presented between the energy-absorbing steps and between the seat shell and the energy-absorbing step adjacent to the seat shell; and/or the space between the side impact protection block and the seat shell is provided with a buffering member, and the buffering member fills a part or all of the space; and/or projections of the energy-absorbing steps on the surface of the outer shell of the seat shell are identical to or different from each other.

According to one embodiment, an inner side of the side impact protection block is provided with a buffering member, and the buffering member includes at least one of a reinforcing rib and an elastic body. The reinforcing rib is integrally formed with the side impact protection block; and/or the elastic body is fixed to an inner side surface of the side impact protection block via a fixing seat provided on the inner side of the side impact protection block, or the elastic body is bonded to an outer side surface of the side impact protection block, or the elastic body is fitted over the outer side surface of the side impact protection block.

According to one embodiment, the seat shell includes an inner shell close to a child and an outer shell away from the child; the side impact protection blocks enclose and form a bearing area, and the outer shell and the inner shell enclose and form a buffering area; the side impact protection block and the outer shell or the inner shell are a one-piece part; the inner side of the side impact protection block is provided with a buffering member, and the buffering member extends from the bearing area to the buffering area.

According to one embodiment, the buffering member includes a reinforcing rib extending from the side impact protection block to the outer shell; or the buffering member includes a reinforcing rib, the reinforcing rib and the inner shell of the seat shell are a one-piece part, the inner surface of the side impact protection block is provided with a positioning member, and one end of the reinforcing rib extending from the inner shell abuts against the positioning member; or the buffering member includes a reinforcing rib, the reinforcing rib and the inner shell of the seat shell are a one-piece part, and the reinforcing rib extends from the buffering area to the bearing area. The reinforcing rib is provided with a deformation groove.

According to one embodiment, the buffering member includes an elastic body, the elastic body is fixedly installed at the inner side of the side impact protection block, and extends from the bearing area to the buffering area; or the elastic body is fixedly installed at the inner side of the side impact protection block, and extends from an inner surface of the side impact protection block to an inner surface of the outer shell; or the elastic body is fixedly installed at the inner shell, and extends from the buffering area to the bearing area.

According to one embodiment, the buffering member includes an elastic body, the elastic body is fixedly installed at the inner side of the side compact protection block, and one end of the elastic body abuts against the side impact protection block, and the other end of the elastic body abuts against the inner shell; or the elastic body abuts against the outer shell and the inner shell respectively, and extends to the bearing area.

According to one embodiment, the buffering member includes: a reinforcing rib integrally provided at inner sides of the outer shell and the side impact protection block; and an elastic body having one end abutting against the side impact protection block and the other end abutting against the inner shell, the reinforcing rib abuts against the elastic body to position the elastic body.

According to one embodiment, the child safety seat includes a seat body, the seat body includes a backrest part and a seat part, and the side impact protection block and side surfaces of the backrest part or the seat part are a one-piece part; or the child safety seat includes a seat body and a base, the seat body includes a backrest part and a seat part, and the side impact protection block and the side surface of at least one of the backrest part, the seat part and the base are a one-piece part.

According to a further embodiment of the present disclosure, there is provided an infant carrier. The infant carrier includes a seat shell and a buffering layer fixed to the seat shell. The infant carrier further includes a side impact protection block. The side impact protection block is integrally formed with the buffering layer and protrudes from the outer side surface of the shell portion.

According to a further embodiment of the present disclosure, there is provided a child booster seat. The child booster seat includes a seat part and armrest parts fixed on both sides of the seat part. The child booster seat further includes a side impact protection block. The side impact protection block is integrally formed with a shell of the armrest part and protrudes out of an outer side surface of the shell of the armrest part.

The side impact protection block integrally formed with the shell of the child carrier according to the present disclosure provides better structural integrity. When subjected to impact, the energy can be evenly distributed over the surface of the shell, to improve absorption of the energy and reduce a risk that fractures caused by stress concentration at seams or connection interfaces lead to uneven energy transfer or failure. Since the side impact protection block and the shell are formed from the same materials in one process, the material properties are uniform, without the performance differences brought by connections of different materials. This can ensure the stability and consistency of the entire structure during the deformation process. In the event of an impact, it can provide a more uniform and effective stress distribution and energy absorption mechanism, thereby improving the protective performance and durability.

The hollow structure can effectively absorb energy through structural collapse and deformation during the collision. Moreover, the design of the energy-absorbing steps makes the energy absorption process more gradual. Each of the steps may be configured act as an independent energy-absorbing unit, gradually absorb collision energy. The shell, as a large energy-absorbing unit, can effectively absorb and distribute the collision energy.

Additionally, secondary fixation operation for the side impact protection mechanism is omitted to greatly simplify the installation and fixation process of the side impact protection block, improve production efficiency, and reduce production costs.

### BRIEF DESCRIPTION OF THE DRAWINGS

The accompanying drawings, which are incorporated into and constitute a part of this specification, illustrate embodiments consistent with the present disclosure, and serve to explain the principles of the present disclosure together with the specification. The accompanying drawings illustrate embodiments of the present disclosure and are used to explain the concepts of the present disclosure together with the following specification.

In the drawings,
FIG. 1 is a schematic view of a child carrier according to the present disclosure, in which a side impact protection block is provided on a side of the carrier body;
FIG. 2 is a schematic view of the child carrier according to the present disclosure, in which the side impact protection block is provided on a lower side of a base;
FIG. 3 is a sectional view taken along A-A of the child carrier shown in FIG. 2;
FIG. 4 is a schematic view of the child carrier according to the present disclosure, in which the side impact protection block is provided on an upper side of a seat body;
FIG. 5 is a sectional view taken along B-B of the child carrier shown in FIG. 4;
FIG. 6 is a schematic view of another embodiment of the child carrier according to the present disclosure;
FIG. 7 is a sectional view taken along C-C of the child carrier shown in FIG. 6;
FIG. 8 is a schematic view of another embodiment of a child carrier according to the present disclosure;
FIG. 9 is a sectional view taken along D-D of the child carrier shown in FIG. 8;
FIG. 10 is a schematic view of yet another embodiment of a child carrier according to the present disclosure;
FIG. 11 is a sectional view taken along E-E of the child carrier shown in FIG. 10;
FIG. 12 is a schematic view of yet another embodiment of a child carrier according to the present disclosure;
FIG. 13 is a sectional view taken along F-F of the child carrier shown in FIG. 12;
FIGS. 14a-14d and FIGS. 15a-15d are schematic views showing various embodiments of the side impact protection block according to the present disclosure;
FIGS. 16a-16b are schematic views further showing various embodiments of a structure of a buffering member of the side impact protection block according to the present disclosure;
FIGS. 17a-17d are schematic views further showing various embodiments of another structure of a buffering member of the side impact protection block according to the present disclosure.
Reference numbers are listed as follows:

| | | | | | |
|---|---|---|---|---|---|
| 10 | child carrier | | | | |
| 100 | carrier body | | | | |
| 110 | shell; | 112 | inner shell; | 114 | outer shell; |
| 100' | body part | | | | |
| 110' | shell; | 112' | inner shell; | 114' | outer shell; |
| 100" | backrest part | | | | |
| 110" | shell; | 112" | inner shell; | 114" | outer shell; |
| 200 | base | | | | |
| 210 | shell | | | | |
| 200' | buffering part | | | | |
| 210' | shell | | | | |
| 200" | seat part | | | | |
| 210" | shell | | | | |
| B | buffering layer | | | | |
| A | armrest part | | | | |
| 300 | side impact protection block | | | | |
| 310 | bearing area; | | 320 | buffering area | |
| 311, 312, 313 | energy-absorbingsteps | | | | |
| 330 | buffering member | | | | |
| 331 | reinforcing rib | | 332 | elastic body | |
| 331a | deformation groove; | | 331b | transverse reinforcing rib; | |
| 340 | fixing seat | | | | |
| 350 | positioning member | | | | |

### DETAILED DESCRIPTION

Hereinafter, exemplary embodiments will be described in detail with reference to the accompanying drawings. Although various modifications and alternatives are easily made to the present disclosure, specific embodiments thereof are shown by way of example in the drawings. However, the present disclosure should not be interpreted as limiting the embodiments set forth herein, on the contrary, the present disclosure will cover all modifications, equivalents, and alternatives falling within the spirit and scope of the embodiments.

The detailed description below primarily takes a child carrier as an example, but the side impact protection block according to the present disclosure may also be applied to other suitable occasions to provide buffering protection for an infant and child within the child carrier.

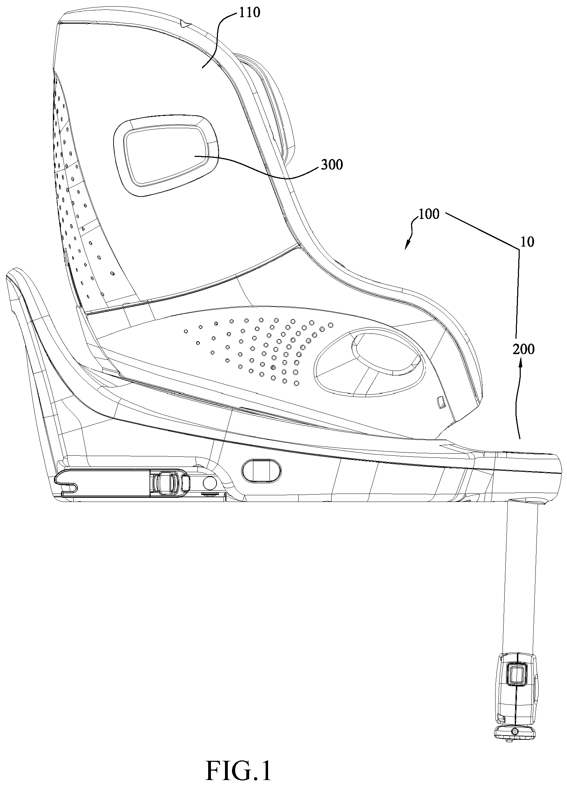

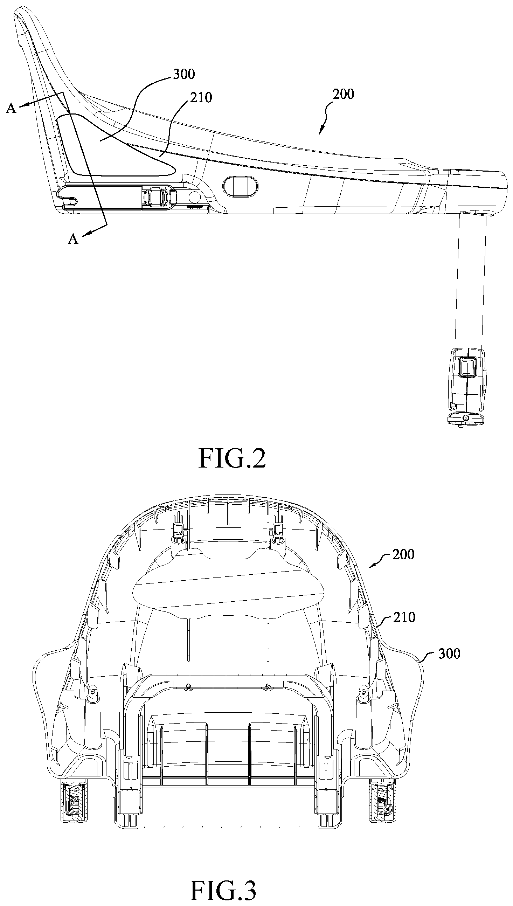

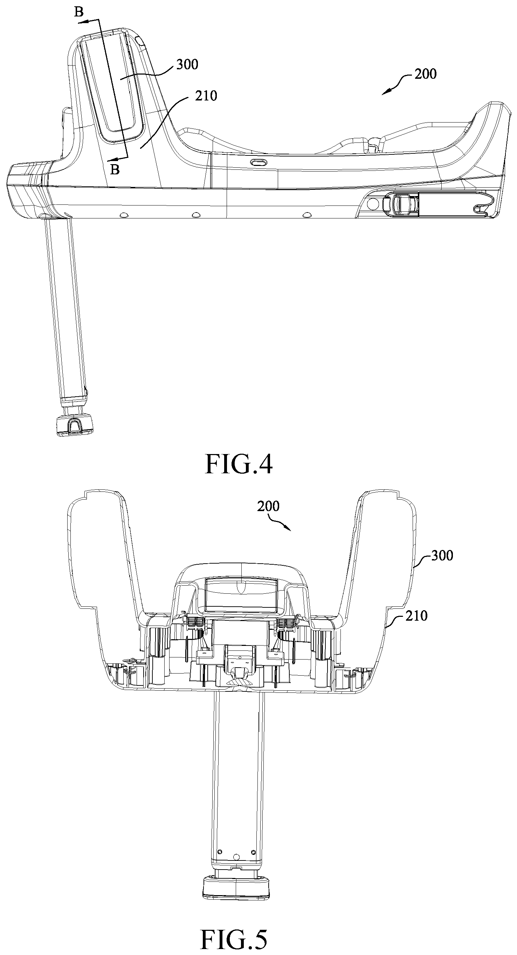

First, referring to FIGS. 1-5, which illustrate a child carrier 10 taking a child safety seat as an example, including a seat body 100 and a base 200. The seat body 100 is provided on the base 200 to carry a child, thereby providing safety protection for the child during travelling. The base 200 is usually installed on a seat of a vehicle. In addition, there is provided a side impact protection block 300 according to the present disclosure. As shown in FIG. 1, the side impact protection block 300 is provided on a shell 110 at a side of the carrier body 100 and is integrally formed with the shell 110 at the side thereof. In addition, the side impact protection block 300 may also be provided on the base 200 of the child carrier 10. As shown in the schematic view of FIG. 2 and the A-A sectional view of FIG. 3, the side impact protection block 300 may be provided at a lower portion of a shell 210 at a side of the base 200 and is integrally formed with the shell 210 at the side thereof. Or as shown in the schematic view of FIG. 4 and the B-B sectional view of FIG. 5, the side impact protection block 300 may also be provided on an upper portion of the shell 210 at the side of the base 200 and is integrally formed with the shell 210 at the side thereof.

As above described, the side impact protection block 300 may be provided on the shell 110 at the side of the carrier body 100 and forms a one-piece part with the shell 110 at the side thereof, or may be provided on the shell 210 at the side of the base 200 and forms a one-piece part with the shell 210 at the side thereof. According to an embodiment not shown, the side impact protection block 300 may also be provided on the shell 110 at the side of the carrier body 100 and the shell 210 at the side of the base 200, and forms a one-piece part with the above-mentioned shells 110 and 210.

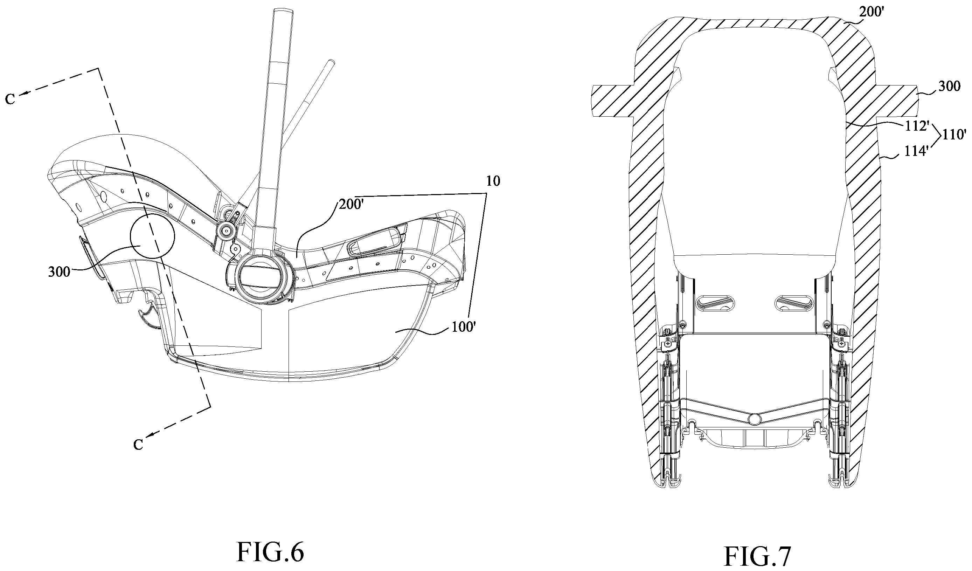

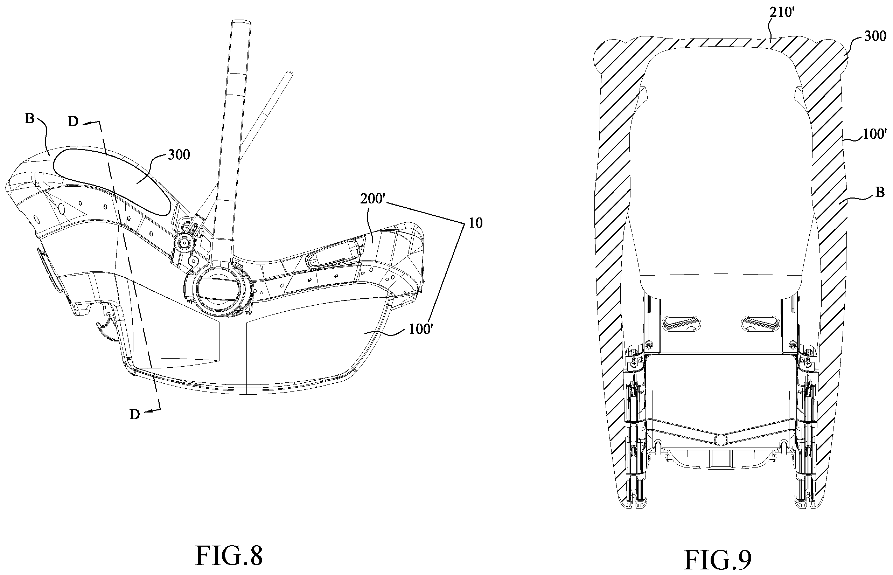

Furthermore, referring to FIGS. 6-9, which illustrate a child carrier 10 taking an infant carrier as an example, including a body part 100' and a buffering part 200'. The buffering part 200' is formed on an upper edge of the body part 100' and made of buffering materials (such as foam materials) to provide better comfort and safety. As shown in the schematic view of FIG. 6 and the C-C sectional view of FIG. 7, the side impact protection block 300 may be provided at a shell 110' at a side of the body part 100' and is integrally formed with the shell 110'. In addition, as shown in the schematic view of FIG. 8 and the D-D sectional view of FIG. 9, the side impact protection block 300 may also be provided on a shell 210' at a side of the buffering part 200' and is integrally formed with the shell 210'.

According to an embodiment not shown, the side impact protection block 300 may also be provided on both the shell 110' at the side of the body part 100' and the shell 210' at the side of the buffering part 200', and form a one-piece part with the above-mentioned shells 110' and 210'.

In addition, the infant carrier may also include a seat shell and a buffering layer B fixed on the seat shell. The side impact protection block 300 of the infant carrier may be a one-piece part with the buffering layer B. The side impact protection block 300 protrudes out of an outer side surface of the shell.

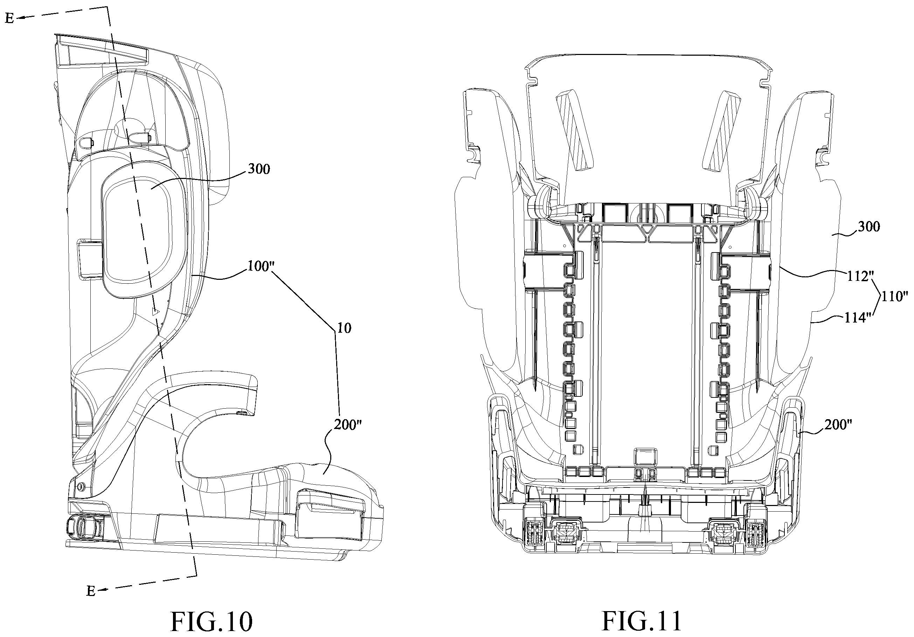

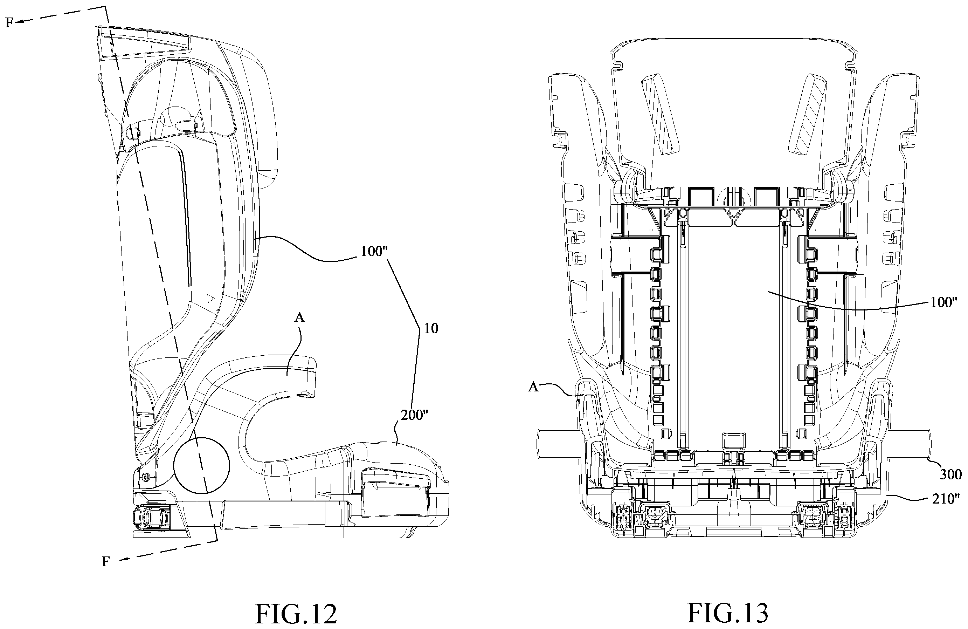

Hereinafter, referring to FIGS. 10-13, which illustrate a child carrier 10 taking a child booster seat as an example, including a backrest part 100" and a seat part 200". The seat part 200" has armrest parts A on both left and right sides thereof. As shown in the schematic view of FIG. 10 and the E-E sectional view of FIG. 11, the side impact protection block 300 may be provided on a shell 110" at a side of the backrest part 100" and is integrally formed with the shell 110". In addition, as shown in the schematic view of FIG. 11 and the F-F sectional view of FIG. 12, the side impact protection block 300 may also be provided at the shell 210" at the side of the armrest part A of the seat part 200" and is integrally formed with the shell 210". In some embodiments, the child carrier 10 only includes a seat part 200" and excludes the backrest part 100".

In addition, according to an embodiment not shown, the side impact protection block 300 may also be provided on both the shell 110" at the side of the backrest part 100" and the shell 210" at the side of the seat part 200", and form a one-piece part with the above-mentioned shells 110" and 210".

In the above embodiments, the side impact protection block 300 is integrally formed with the corresponding shell, there is no need for secondary fixation, which greatly simplifies the installation and fixation process of the side impact protection block. This not only improves production efficiency and reduces production costs, but also the integrally formed side impact protection block has better strength and can better achieve side impact buffering, thereby strengthening the protection of the child in the child carrier. In addition, the integral design of the side impact protection block and the corresponding shell can provide better structural integrity, with no seams or joints. When subjected to an impact, the entire anti-impact protection system can more evenly distribute and absorb energy to reduce the risk that stress concentration at the connection leads to breakage so as to cause uneven energy transfer or failure. Moreover, since the side impact protection block and the corresponding shell are made of the same materials and integrally formed, the material properties are uniform, and there is no performance difference caused by the connection of different materials, which can ensure the stability and consistency of the entire structure during the deformation process. When subjected to an impact, it can provide a more uniform and effective stress distribution and energy absorption mechanism, thereby improving the protective performance and durability.

Hereinafter, a specific structure of the side impact protection block 300 will be described in detail. For the convenience of description, the shell is denoted by reference numeral 110 below. However, the shell may be the shell 110 of the seat body 100 and/or shell 210 of the base 200 of the child carrier 10 taking the child safty seat as an example. The shell may be the shell 110' of the body part 100' and the shell 210' of the buffering part 200' of the child carrier 10 taking an infant carrier as an example. Alternatively, the shell may be the shell 110" of the backrest part 100" and the shell 210" of seat part 200" of the child carrier 10 taking a child booster seat as an example.

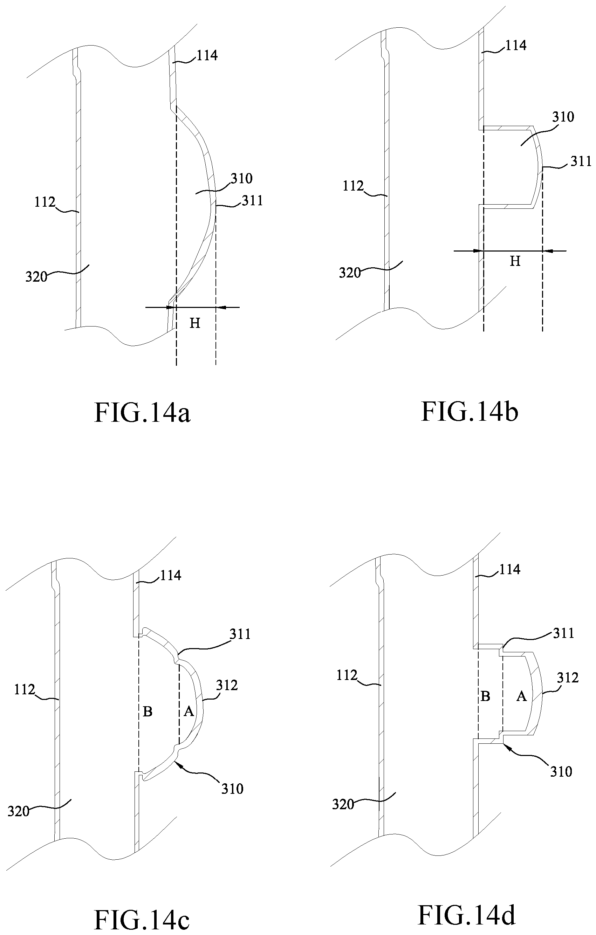

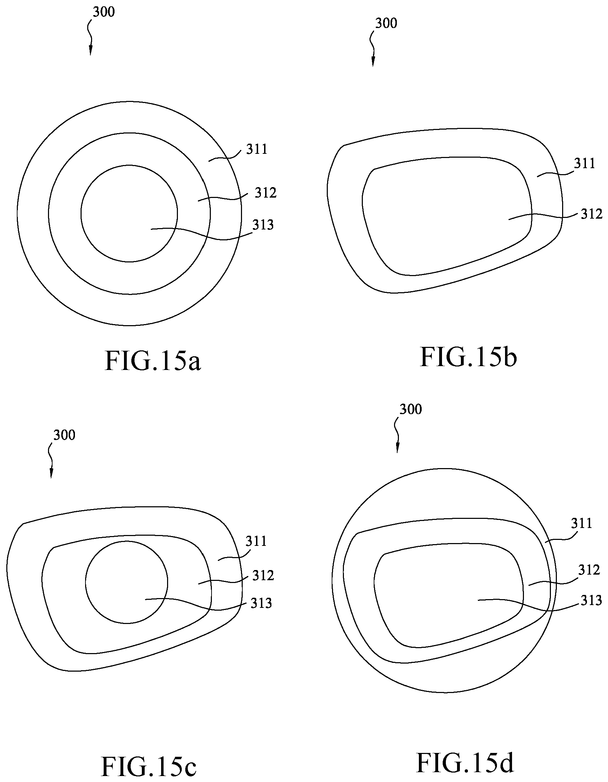

Referring to FIGS. 14a-14d and FIGS. 15a-15d, various embodiments of the side impact protection block 300 are shown. However, the various embodiments shown in the drawings are not exhaustive, and other variations may be conceived based on the technical concept disclosed in the present disclosure.

The side impact protection block 300 according to the present disclosure is provided on the seat shell and protrudes out of the surface of the seat shell and forms a one-piece part with the seat shell 1. The seat shell may be any of the aforementioned shells (e.g., shells 110, 210, 110', 210', 110", 210"), which will be referred to as shell 110 for the convenience of description below.

As shown in FIGS. 14a-14d, the shell 110 includes an inner shell 112 and an outer shell 114, and the side impact protection block 300 is integrally formed with the outer shell 114. According to an embodiment not shown, the side impact protection block 300 may also be integrally formed with the inner shell 112. In this case, the outer shell 114 may be provided with a first through-hole, through which the side impact protection block 300 passes and protrudes outward. No matter whether the side impact protection block is integrally formed with the inner shell 112 or the outer shell 114, if the outer shell 114 is also provided with a seat cover, the seat cover may also be provided with a second through-hole, through which the side impact protection block 300 passes and protrudes outward. In this case, it is required that the second through-hole corresponds to the first through-hole. In addition to allowing the side impact protection block 300 to pass through the through-holes and protrude outward, the through-holes may also be used to fix and position the seat cover. Certainly, the shell 110 may also be a single-layer structure, and the side impact protection block 300 is integrally formed with the shell 110 with the single-layer structure.

As shown in FIGS. 14a-14d, the side impact protection block 300 and a connection line of a plane where the outer shell 114 of the seat shell 110 is located enclose and form a bearing area 310, while the connection line of a plane where the outer shell 114 of the seat shell 110 is located and a connection line of a plane where the inner shell 112 of the seat shell 110 is located enclose and forw a buffering area 320 at a position corresponding to the side impact protection block 300. When subjected to a side impact, the bearing area 310 bears pressure from the impact, and then the pressure is evenly distributed by the buffering area 320. As shown in FIGS. 14a and 14b, the bearing area 310 extends outward from the connection line of a plane where the outer shell 114 is located, while the buffering area 320 is adjacent to the bearing area 310 and extends from the bearing area 310 into the inner shell 112. Both the bearing area 310 and the buffering area 320 are hollow cavities. The hollow cavity may effectively absorb energy through the collapse and deformation of the structure during a collision.

In addition, according to one embodiment of the present disclosure, as shown in FIGS. 14c-14d, the outer surface of the side impact protection block 300 is provided with one or more energy-absorbing steps. One energy-absorbing step 311 is shown in FIGS. 14a and 14b, while two energy-absorbing steps 311 and 312 are shown in FIGS. 14c and 14d. Certainly, the present disclosure is not limited thereto, and three or more energy-absorbing steps may also be provided. Three energy-absorbing steps 311, 312, and 313 are shown in FIGS. 15a-15d. In addition, the connection lines of a plane where the energy-absorbing steps is located divide the bearing area 310 into one or more hollow areas. In FIGS. 14c and 14d, the energy-absorbing step 311 divides the bearing area 310 into two hollow areas A and B. When subjected to impact pressure, the energy-absorbing step 312 bears the pressure firstly and is buffered by the hollow area A, and then the energy-absorbing step 311 bears the pressure and is buffered by the hollow area B, and finally the buffering area 320 provides buffering. In this way, the impact pressure can be withstood step by step to avoid damage to the side impact protection block 300, the outer shell 114, and the inner shell 112. In order to improve the ability to bear impact pressure, the wall thickness of the energy-absorbing step 312 may also be increased, that is, the wall thickness of the energy-absorbing steps 313, 312, and 311 is decreased gradually from the outside to the inside (i.e., from the bearing area 310 to the buffering area 320). In the present disclosure, unless otherwise specified, the side away from the child when the child is seated in the child safety seat is defined as "outside" and the side close to the child is defined as "inside".

There are a smooth arc transition (as shown in FIGS. 14a and 14c) and a straight line connection (as shown in FIGS. 14b and 14d) between the energy-absorbing steps 311 and 312 and between the outer shell 114 (or the shell 110 with the single-layer configuration, the same below) and the adjacent energy-absorbing step 311. The energy-absorbing steps may be integrally formed with each other, and the energy-absorbing step adjacent to the outer shell 114 may also be integrally formed with the outer shell 114. A height difference between the energy-absorbing steps may be set to 5 mm-20 mm. The cross-sectional area of each of the energy-absorbing steps decreases gradually from the outside to the inside. The cross-sectional area of each of the energy-absorbing step may be circular, rectangular, triangular (as shown in FIG. 2), oval, trapezoidal, mushroom-shaped, or other irregular shapes. Through the configuration of the energy-absorbing steps, multi-stage buffering may be provided, to further enhance the buffering effect of the side impact protection block 300 and improve the protective effect on the child. In addition, the multi-stage design for the energy-absorbing steps can make the energy-absorbing process more gradual. Each of the energy-absorbing steps may act as an independent energy-absorbing unit to gradually absorb collision energy, while the shell acts as a large-size energy-absorbing unit to effectively absorb and distribute the collision energy.

As shown in FIGS. 14a and 14b, a height H (i.e., a width of the bearing area 310) of the side impact protection block 300 protruding from the plane where the outer shell 114 is positioned may be, for example, 20mm-150mm. In the case that the side impact protection block 300 is integrally formed with the inner shell 112, the height of the protection block protrudes protruding from the surface of the outer shell 114 is 20mm-150mm. An orthographic projection area of the side impact protection block 300 on the plane where the outer shell 114 is positioned may be, for example, 20cm²-100cm². In addition, a height position of the side impact protection block 300 also needs to meet the requirement that a distance from the top end of the side impact protection block 300 to the inner side surface of the headrest is sufficient, for example, not less than 120mm, to ensure that an impact point of a protrusion is farther from the child's head when subjected to a side impact, thereby further improving safety.

In addition, a buffering member 330 may also be provided on the inner side of the bearing area 310. The buffering member 330 may fill part or all of a space of the bearing area 310 and the buffering area 320. In the following, the buffering member 330 will be described in detail. Various embodiments of the side impact protection block 300 are shown in FIGS. 15a-15d. FIGS. 15a, 15c, and 15d all show the side impact protection block 300 having three energy-absorbing steps 311, 312, and 313. The shapes of the three energy-absorbing steps may be the same, and may be circular as shown in FIG. 15a; or the shapes of the three energy-absorbing steps may be different, as shown in FIGS. 15c and 15d. FIG. 15b shows two energy-absorbing steps. In the event of two energy-absorbing steps, the shapes of the two energy-absorbing steps may be the same or different. Based on the technical concept disclosed in the present disclosure, combination of the other shapes and structures not shown may also be extended.

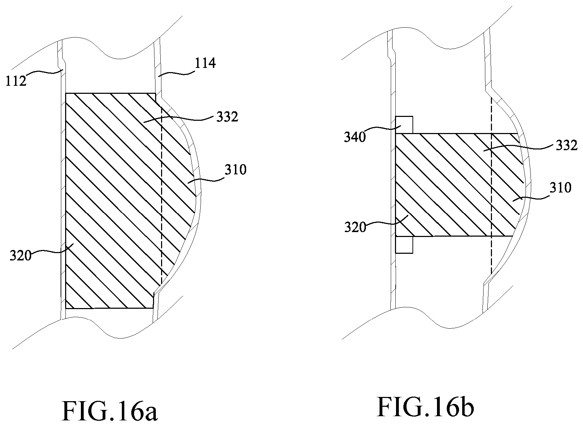

Hereinafter, one embodiment of the buffering member 330 of the side impact protection block 300 will be illustrated with reference to FIGS. 16a-16b. First, as shown in FIGS. 16a-16b, the buffering member 330 may be an elastic body 332, for example foam materials, such as expanded polypropylene (EPP) foam material, a spring, or a soft jelly. The elastic body 332 may be bonded to the inner side of the side impact protection block 300 with an adhesive, for example, bonded to an inner surface of the side impact protection block 300, as shown in FIG. 16a; or a fixing seat 340 may be provided on the inner shell 112, and the elastic body 332 is installed to the fixing seat 340 and extends towards the bearing area 310, as shown in FIG. 16b. Certainly, based on an embodiment not shown, a fixing seat may also be provided on the inner surface of the side impact protection block 300, and the elastic body 332 is fixedly installed at the fixing seat and extends towards the buffering area 320. In the embodiments shown in FIGS. 16a and 16b, the elastic body 332 fills all of the space of the bearing area 310 and the buffering area 320. Certainly, based on an embodiment not shown, the elastic body 332 may also fill part of the space of the bearing area 310 and the buffering area 320, thereby leaving a gap between the elastic body 332 and the inner shell 112 or the inner surface of the bearing area 310. The elastic body 332 may also be fitted over the outer surface of the side impact protection block 300. In this case, the elastic body may be bonded to the outer surface of the side impact protection block 300, or may be fitted over the outer surface of the side impact protection block 300 and then fixed to the outer shell 114, thereby directly providing a more buffering effect and avoiding damage to the side impact protection block 300. In some embodiments, as shown in FIG. 16a, one end of the elastic body 332 abuts against the inner shell 112, and the other end of the elastic body 332 abuts against the outer shell 114, and a part of the elastic body 332 extends into the bearing area, and leaves a gap with the inner surface of the side impact protection block 300 (not shown). In this way, when the child safety seat is subjected to a side impact, the area where the side impact protection block 300 is positioned collapses earlier than the area where the outer shell 114 is positioned, to provide a buffering effect at steps. In some embodiments, as shown in FIG. 16a, one end of the elastic body 332 abuts against the inner shell 112, and the other end of the elastic body 332 abuts against the inner surface of the side impact protection block 300, and a gap may be left between the elastic body 332 and the inner surface of the outer shell 114 (not shown). In this way, when the child safety seat is subjected to a side impact, the elastic body 332 provides buffering for the smaller area where the side impact protection block 300 is positioned, and then provides buffering for the larger area where the outer shell 114 is positioned, to provide a buffering effect at steps. Optionally, a shell thickness of the side impact protection block 300 is greater than a shell thickness of the outer shell 114.

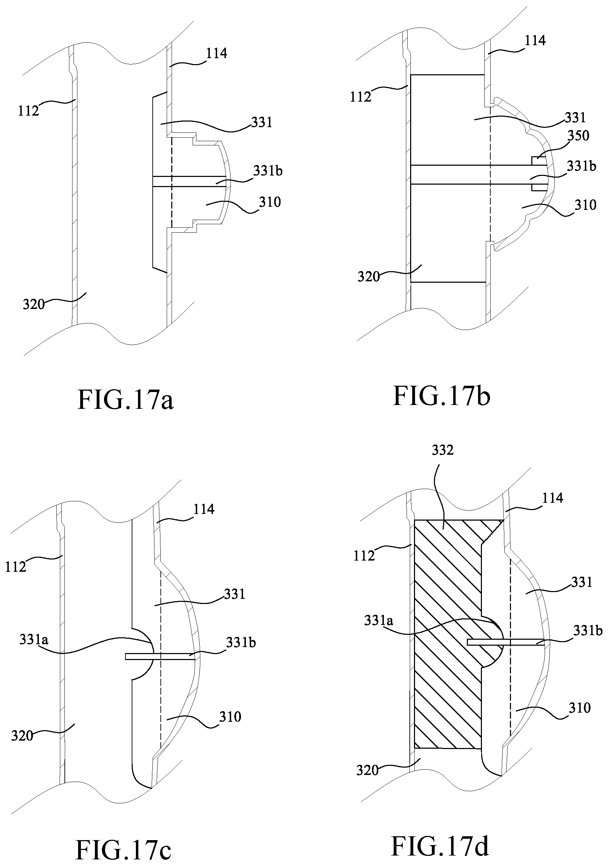

FIGS. 17a-17c show another embodiment of the buffering member 330, in which the buffering member 330 is a reinforcing rib 331. As shown in FIG. 17a, the reinforcing rib 331 may be a one-piece part with the side impact protection block 300 and the inner surface of the outer shell 114, extend towards the buffering area 320 and abut against the surface of the inner shell 112. Certainly, there may be a gap between the reinforcing rib 331 and the surface of the inner shell 112 (as shown in FIG. 17a). Alternatively, as shown in FIG. 17b, the reinforcing rib 331 may be a one-piece part with the inner shell 112. In this case, a positioning member 350 is provided on the inner surface of the side impact protection block 300, and one end of the reinforcing rib 331 extending from the inner shell 112 abuts against the positioning member 350. In this way, the reinforcing rib 331, especially a transverse reinforcing rib 331b, may be positioned to prevent the reinforcing rib 331 from sliding undesirably when the side impact protection block 300 is subjected to force. In addition, as shown in FIG. 17c, the reinforcing rib 331 may also be provided with a deformation groove 331a for receiving deformation of the reinforcing rib 331 and the side impact protection block 300 when subjected to an impact.

FIG. 17d shows yet another embodiment of the buffering member 330, in which the buffering member 330 includes a reinforcing rib 331 and an elastic body 332. As shown in FIG. 17d, the reinforcing rib 331 is a one-piece part with the inner surface of the side impact protection block 300 and extends towards the buffering area 320, while the elastic body 332 abuts between the inner shell 112 and the reinforcing rib 331. Certainly, based on an embodiment not shown, the reinforcing rib 331 may also be a one-piece part with the inner shell 112 and extend towards the bearing area 310, while the elastic body 332 abuts between the inner surface of the side impact protection block 300 and the reinforcing rib 331. In this case, the transverse reinforcing rib 331b of the reinforcing rib 331 may protrude into the elastic body 332, so that the reinforcing rib 331 may also serve to position the elastic body 332. The transverse reinforcing rib 331b shown in FIGS. 17a-17d may be, for example, a threaded stud.

Based on the technical concept disclosed in the present disclosure, other buffering members and reinforcing members (not shown) may also be extended, for example, the buffering member may also be a spring. The spring is fixed to the inner shell 112 or the outer shell 114 to provide further buffering effect.

The above-mentioned buffering member 330 may be provided to further improve the strength of the side impact protection block 300, thereby further enhancing the buffering effect and safety.

## Claims

1. A child safety seat (10), comprising:
a seat shell (110); and
a side impact protection block (300) provided on the seat shell (110) and protruding from a surface of the seat shell (110),
**characterized in that** the side impact protection block (300) and the seat shell (110) are a one-piece part.

2. The child safety seat (10) according to claim 1, **characterized in that** an outer surface of the side impact protection block (300) is provided with a plurality of energy-absorbing steps (311, 312, 313), and a connection lines of planes where the energy-absorbing steps (311, 312, 313) are located divide a space between the side impact protection block (300) and the seat shell into a plurality of hollow areas.

3. The child safety seat (10) according to claim 2, **characterized in that**
the energy-absorbing steps (311, 312, 313) have wall thickness decreasing gradually from an outside to an inside.

4. The child safety seat (10) according to any one of claims 2 or 3, **characterized in that**
the space between the side impact protection block (300) and the seat shell (110) is provided with a buffering member (330), and the buffering member comprises a reinforcing rib that extends from the seat shell (110) to the energy-absorbing steps (311, 312, 313).

5. The child safety seat (10) according to any one of claims 2 to 4, **characterized in that** an inner side of the side impact protection block (300) is provided with a buffering member (330), and the buffering member (330) comprises an elastic body (332) that fills at least part of the energy-absorbing steps(311, 312, 313) of the protection block.

6. The child safety seat (10) according to any one of claims 1 to 5, **characterized in that**
the seat shell (110) comprises an inner shell (112) close to a child and an outer shell (114) away from the child;
the side impact protection blocks (300) enclose and form a bearing area (310), and the outer shell (114) and the inner shell (112) enclose and form a buffering area (320);
the side impact protection block (300) and the outer shell (114) or the inner shell (112) are a one-piece part.

7. The child safety seat (10) according to claim 6, **characterized in that**
the inner side of the side impact protection block (300) is provided with a buffering member (330), and the buffering member (330) extends from the bearing area (310) to the buffering area (320).

8. The child safety seat (10) according to claims 6 or 7, **characterized in that** the buffering member (330) comprises a reinforcing rib (331) extending from the side impact protection block (300) to the outer shell (114).

9. The child safety seat (10) according to claims 6 to 8, **characterized in that**
the buffering member (330) comprises a reinforcing rib (331), the reinforcing rib (331) and the inner shell (112) of the seat shell (110) are a one-piece part, the inner surface of the side impact protection block (300) is provided with a positioning member (350), and one end of the reinforcing rib (331) extending from the inner shell (112) abuts against the positioning member (350).

10. The child safety seat (10) according to claims 6 to 9, **characterized in that**
the buffering member (330) comprises a reinforcing rib (331), the reinforcing rib (331) and the inner shell (112) of the seat shell (110) are a one-piece part, and the reinforcing rib (331) extends from the buffering area (320) to the bearing area (310).

11. The child safety seat (10) according to any one of claims 7 to 10, **characterized in that** the buffering member (330) comprises an elastic body (332),
the elastic body (332) is fixedly installed at the inner side of the side impact protection block (300), and extends from the bearing area (310) to the buffering area (320); and/or
the elastic body (332) is fixedly installed at the inner side of the side impact protection block (300), and extends from an inner surface of the side impact protection block (300) to an inner surface of the outer shell (114); and/or
the elastic body (332) is fixedly installed at the inner shell (112), and extends from the buffering area (320) to the bearing area (310).

12. The child safety seat (10) according to any one of claims 6 to 11, **characterized in that** the buffering member (330) comprises an elastic body (332),
the elastic body (332) is fixedly installed at the inner side of the side compact protection block (300), and one end of the elastic body (332) abuts against the side impact protection block (300), and the other end of the elastic body (332) abuts against the inner shell (112).

13. The child safety seat (10) according to any one of claims 5 to 12, **characterized in that**
the elastic body (332) abuts against the outer shell (114) and the inner shell (112) respectively, and extends to the bearing area (310).

14. The child safety seat (10) according to any one of claims 6 to 13, **characterized in that** the buffering member (330) comprises:
a reinforcing rib (331) integrally provided at inner sides of the outer shell (114) and the side impact protection block (300); and
an elastic body (332) having one end abutting against the side impact protection block (300) and the other end abutting against the inner shell (112),
wherein the reinforcing rib (331) abuts against the elastic body (332) to position the elastic body (332).

15. The child safety seat (10) according to any one of claims 1 to 14, **characterized in that**
the child safety seat (10) comprises a seat body (110"), the seat body comprises a backrest part (100") and a seat part (200"), and the side impact protection block (300) and side surfaces of the backrest part (100") or the seat part (200") are a one-piece part; or
the child safety seat comprises a seat body (100) and a base (200), the seat body (100) comprises a backrest part and a seat part, and the side impact protection block (300) and the side surface of at least one of the backrest part, the seat part and the base (200) are a one-piece part.
